# EUROPEAN PATENT SPECIFICATION

(11) **EP 1 933 988 B1**
(45) Date of publication and mention of the grant of the patent: **28.08.2013**
(21) Application number: 06810018.9
(22) Date of filing: 09.10.2006
(51) Int. Cl.: B05B 1/20, A01M 7/00

(54) **VERTICAL AIR CONVEYOR FOR AGRICULTURAL SPRAYER MACHINES**
VERTIKALLUFTFÖRDERER FÜR LANDWIRTSCHAFTLICHE SPRÜHMASCHINEN
TRANSPORTEUR A AIR VERTICAL POUR PULVERISATEURS AGRICOLES

(30) Priority: 11.10.2005 IT VR20050124
(43) Date of publication of application: 25.06.2008
(73) Proprietor: Marcantoni, Ivano, 37059 Volon di Zevio (VR) (IT)
(72) Inventor: Marcantoni, Ivano, 37059 Volon di Zevio (VR) (IT)
(74) Representative: Contadin, Giorgio
(86) International application number: PCT/IT2006/000723
(87) International publication number: WO 2007/043090

(56) References cited:
- EP-A1- 0 653 157
- WO-A-95/16347
- FR-A1- 2 720 896

## Description

This patent for an industrial invention proposes an air distributor bar applicable to sprayers, that is to say, to those devices used for nebulizing substances of various kinds on crops, fields, fruit trees and for other farming applications, see e.g. EP-A- 0 653 157.

The device according to the invention can be fitted to agricultural implements used for applying crop treatment substances, typically fungicides and other pesticide solutions. The device enables long distance application of the substance with a controlled and constant spray of uniformly distributed intensity.

In short, the device according to the invention nebulizes the aqueous chemical solution in a perfectly balanced outflow of air that creates a smooth flow perpendicularly to the axis of the bar.

The device according to the invention relates to the field of agricultural machinery, and in particular, to nebulizing devices or sprayers.

It is known that sprayers used in agricultural applications are equipped with fans that create an air flow enabling a predetermined quantity of nebulized liquid substance to be distributed on rows of plantations, orchards or other crop fields.

At present, for distributing flows of a nebulized fungicidal substance, an air spraying apparatus is used which is equipped with a distribution element, usually vertical, especially designed to spread the substance while the tractor the distributor is mounted on moves alongside the rows of crop plants.

The distribution element, as currently made, consists of an elongated vertical hollow body with an elongated slot extending longitudinally along it at right angles to the direction of tractor travel and constituting the air outflow area.

The sprayer and the elongated hollow body are connected to each other by a tube through which the air flows from the sprayer into the elongated body. A series of nozzles for distributing the treatment liquid from a tank and from a pump are located at regular intervals along the slot in the same direction as that in which the slot itself extends.

Simultaneously blowing air through the slot of the air distributor and feeding treatment liquid through the nozzles results in the emission of a strong jet of nebulized substance that is propagated laterally outwards from the distributor itself.

Prior art distributors, in their current forms, have several disadvantages which limit their application range at least when compared to the improved and more effective performance offered, instead, by the device according to the invention.

The first and main disadvantage of traditional distributors is that the air flow is not uniform along the entire length of the distribution area, due to the fact that the air from the sprayer sleeve coupling is pumped in from the top (or bottom) of the distributor and, as it flows through, tends to be compressed at the bottom of it (or at the top of it, in the second case).

Obviously, the air at the bottom (or top) is forced out at a higher pressure, thus creating unequal conditions compared to the area at the opposite upper (or lower) end where the pressure is considerably lower.

This imbalance means that the treatment substance is not distributed evenly on the field or orchard which in turn means that the result of the treatment is not always unsatisfactory and must in some cases be repeated, thus wasting time and resources.

This invention has for an aim to propose a spraying device that overcomes the above mentioned disadvantage and to provide an improved device designed to better distribute the treatment substance on the crops, making distribution constant along the full length of the air bar.

In the distributing device according to the invention, the air is no longer channelled in such way as to create a higher pressure at the end opposite the inflow end but its flow is distributed uniformly along its full length, thus greatly improving spraying performance.

The aims and advantages of the invention according to claim are all achieved by an air distributing bar device for sprayers wherein the interior of the casing which the air is fed into comprises a breaking element that conveys the air in such a way as not to create a higher pressure at the end opposite the inflow end but in a perfectly uniform manner along the full length of the distributing device itself.

The breaking element is created by a substantially tubular element along which there are openings which, through a double chamber, cause the air to flow first through the innermost part of the device and then through the outermost part of the device, allowing the air to be distributed in a perfectly uniform and constant manner.

Another characteristic of the invention is the fact that the air outlet openings consist of a plurality of holes with measured diameter and regular or variable spacing.

Other characteristics and details of the invention can be better understood from the following non-limiting description of it, provided merely by way of example, with reference to the accompanying drawings in which:
- Figure 1: is a schematic front view of the distributor according to the invention in its entirety;
- Figure 2: is a schematic side view of the air distributor bar represented in cross section through the line B-B of Figure 1;
- Figure 3: is a schematic plan view of the distribution device represented in cross section through the line C-C of Figure 1;
- Figure 4: is a schematic front view of the distributor;

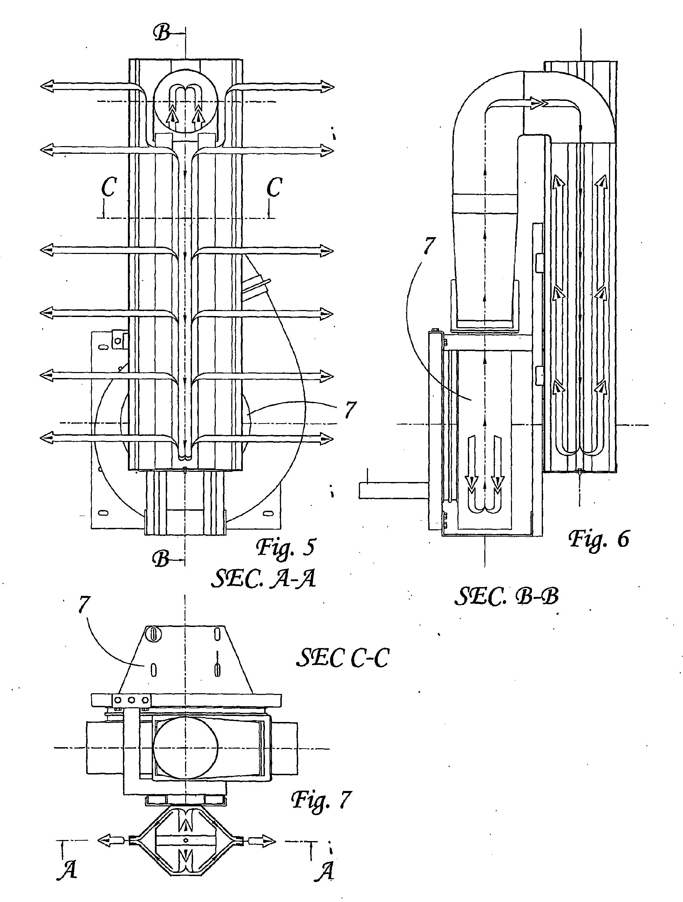

- Figure 5: is a schematic view of the distributor combined with the air distribution assembly, represented in cross section through the line B-B of Figure 4;
- Figure 6: is a schematic view of the distributor combined with the air generating assembly, represented in cross section through the line C-C of Figure 4;
- Figure 7: is a schematic view of the single-column version of the distributor according to the invention;
- Figure 8: is a schematic front view of the three-column version of the distributor of Figure 7;
- Figure 9: is a schematic side view of the three-column distributor;
- Figure 10: is a plan view of the three-column distributor.

With reference to the accompanying drawings, the numeral 1 denotes in its entirety a distributing device according to the invention which essentially consists of a hollow outer casing 2 made in any conventional shape, for example with polygonal, circular or elliptic cross section, whether regular or irregular, depending on requirements.

The casing 2 of the distributing device 1 is delimited and closed, at its bottom end, by a cover 3 and, at its top end, by a second cover 4, while the upper part of it is also provided with an elbow fitting 5 of circular cross section for a sleeve coupling 6 designed to channel air from an air generating device 7 into the distributing device 1.

Inside the casing 2 there is a breaking element 8, forming a double wall and mounted parallel to, and at a certain distance from, the outer wall along almost the full length of the distributor.

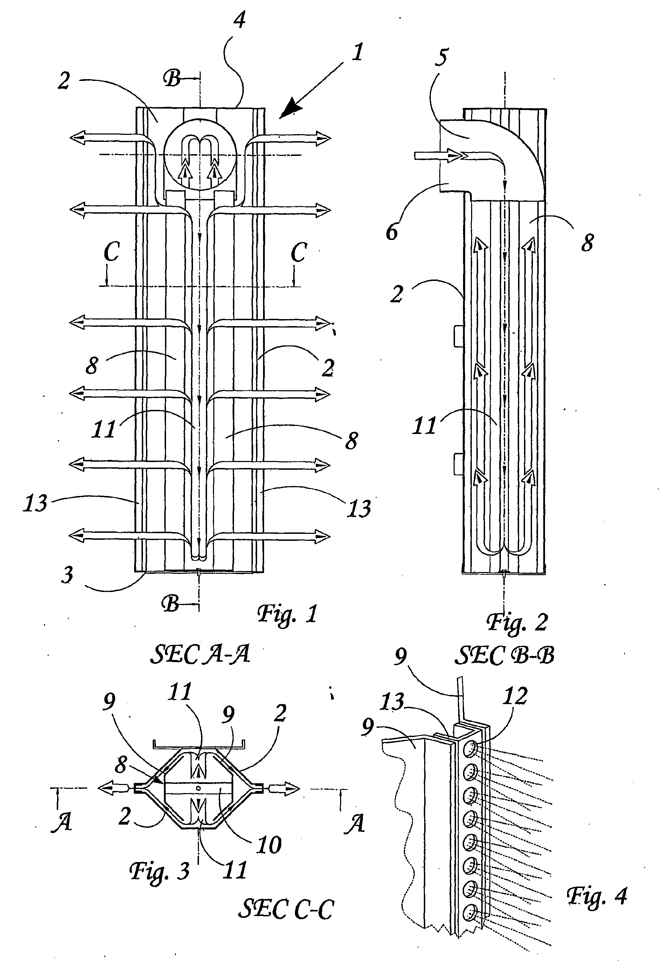

As illustrated in Figure 3, the breaking element 8 consists of a pair of profiles 9 having a substantially C-shaped section positioned in front of one another and joined by connecting elements labelled 10.

The two profiles positioned in this way form a structure that forces the air to flow out along a well-defined path, as clearly indicated in Figure 2.

The characteristic air flow that develops inside the device is due to the fact that the sleeve coupling 6 is connected to the elbow fitting 5 whose outlet into the distributing device leads into the breaking element 8, so that the air is channelled directly into the chamber defined by the breaking element itself.

The breaking element made in this way forms longitudinal openings 11 through which the air moving along the inside of the breaking element flows first downwards but almost simultaneously also outwards horizontally, penetrating the spaces between the breaking element itself and the outer casing.

The air flows out of the outer casing through suitable holes 12 made in an elongated plate-like element 13 inserted lengthways into the body of the distributing device.

These holes may be equal in size and evenly spaced or they may vary in size and spacing, so that the shape of the double wall break combined with the shape and distribution of the holes makes it possible to control the air flow out of the distributing device in the most suitable manner.

The perforated plate-like element 13 is positioned lengthways on two opposite sides of the distributing device and at right angles to the direction of vehicle movement, so that, during treatment, the jets of air and treatment liquid mixture are always directed at the crops, fruit trees and so on in a direction perpendicular to the foliage.

The air flowing out of the holes combines with the treatment liquid dispensed by customary nozzles which are not illustrated and is distributed in a perfectly uniform manner along the full length of the distributing device, thanks to the breaking element 8.

In another embodiment, the double-wall break 8, through which the air flows first in one direction and then in the opposite direction, may have any shape and cross section, creating any number of solutions but falling outside the scope of the inventive concept.

In another embodiment, the distributing device may be positioned either vertically or horizontally, depending on the type of crops or trees to be treated.

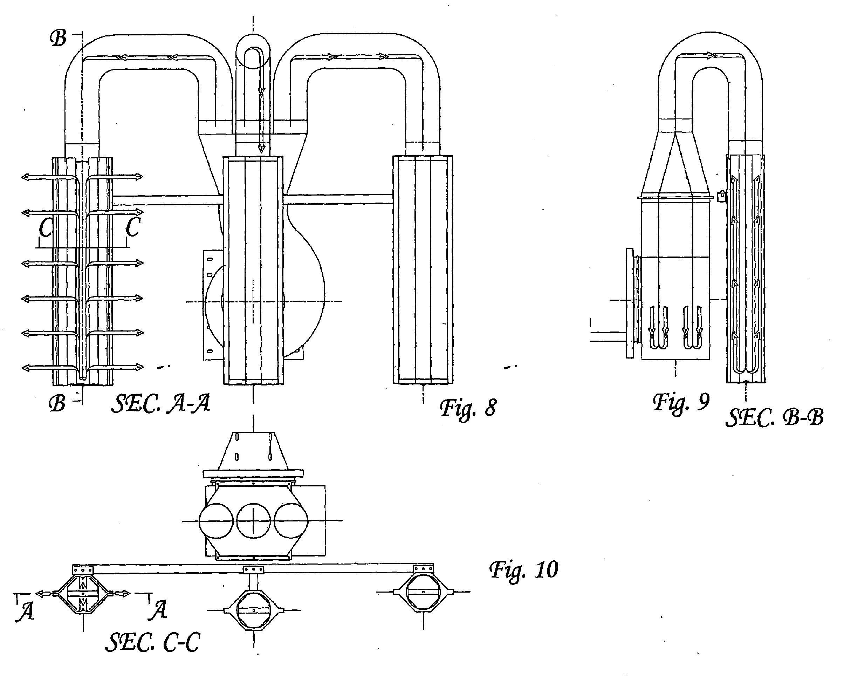

Figure 8, 9 and 10 illustrate yet another embodiment, where the distributing device is of the multiple type, with a central distributing body and two lateral bodies. This configuration is particularly suitable for treating multiple rows simultaneously.

It will be understood that an expert in the trade may modify and adapt the device described above using equivalent mechanical parts and components to achieve the same purpose and without departing from the scope of the inventive concept as defined by the claims set out below.

## Claims

1. An air distributing bar device (1) for sprayers consisting of an outer casing (2) into which the air is fed and comprising a breaking element (8) that creates a double wall where the air flows out through suitable openings (11), creating air flows that are perfectly uniform along the full length of the distributing device (1), wherein:
• said casing (2) of the distributing device (1) is delimited and closed, at its bottom end, by a cover (3) and, at its top end, by a second cover (4), while the upper part of it is also provided with an elbow fitting (5) of circular cross section for a sleeve coupling (6) designed to channel air from an air generating device (7) into the distributing device (1) and
• said breaking element (8) consists of a pair of profiles (9) having a substantially C-shaped section positioned in front of one another and joined by connecting elements (10),
wherein said two profiles (9) provide a structure that forms a forced air path whose outflow lines are determined by the fact that said sleeve coupling (6) is connected to said elbow fitting (5) whose outlet into the distributing device (1) leads into said breaking element (8) so that the air is channelled directly into the chamber defined by said breaking element (8).

2. The device according to the foregoing claim, **characterized in that** said breaking element (8), forming a double wall, is mounted parallel to, and at a certain distance from, the outer wall along almost the full length of the distributing device (1).

3. The device according to any of the foregoing claims, **characterized in that** said breaking element (8) forms longitudinal openings (11) through which the air moving along the inside of said breaking element (8) flows first downwards but almost simultaneously also outwards horizontally, penetrating the spaces between said breaking element (8) and said outer casing (2).

4. The device according to any of the foregoing claims, **characterized in that** the air flows out of said outer casing (2) through suitable holes (12) made in an elongated plate-like element (13) inserted lengthways into the body of the distributing device (1).

5. The device according to claim 4, **characterized in that** said holes (12) may be equal in size and evenly spaced or they may vary in size and spacing, so that the shape of the double wall breaking element (8) combined with the shape and distribution of the holes makes it possible to control the air flow out of the distributing device (1) in the most suitable manner.

6. The device according to claim 4, **characterized in that** said perforated plate-like element (13) is positioned lengthways on two opposite sides of the distributing device (1) and at right angles to the direction of vehicle movement, so that, during treatment, the jets of air and treatment liquid mixture are always directed at the crops, fruit trees and so on in a direction perpendicular to the foliage.

## Patentansprüche

1. Eine Luftverteilungs-Stabvorrichtung (1) für Sprühgeräte bestehend aus einem Außengehäuse (2), in das Luft zugeführt wird, und umfassend ein Unterbrechungselement (8), das eine doppelte Wand ausbildet, worin die Luft über geeignete Öffnungen (11) ausströmt, so dass über die gesamte Länge der Verteilvorrichtung (1) perfekt gleichförmige Luftströme erzeugt werden, wobei:
- das Gehäuse (2) der Verteilvorrichtung (1) an seinem unteren Ende durch eine Abdeckung (3) und an seinem oberen Ende durch eine zweite Abdeckung (4) begrenzt und geschlossen ist, während der obere Teil davon mit einem Winkelstück (5) mit kreisförmigem Querschnitt für eine Hülsen-Kupplung (6) versehen ist, welche dazu ausgebildet ist, Luft von einem Lufterzeugungsmittel (7) in die Verteilvorrichtung (1) hinein zu kanalisieren, und
- das Unterbrechungselement (8) aus einem Paar von Profilen (9), mit einem im Wesentlichen C-förmigen Abschnitt besteht, welche voreinander positioniert und durch Verbindungselemente (10) miteinander verbunden sind,
wobei die beiden Profile (9) eine Struktur erzeugen, die einen erzwungenen Luftpfad ausbildet, dessen Abflussleitungen dadurch bestimmt sind, dass die Hülsen-Kupplung (6) mit dem Winkelstück (5) verbunden ist, dessen Auslass in die Verteilervorrichtung (1) hinein in das Unterbrechungselement (8) führt, so dass die Luft direkt in die die durch das Unterbrechungselement (8) definierte Kammer kanalisiert ist.

2. Vorrichtung nach dem vorangehenden Anspruch, **dadurch gekennzeichnet, dass** das eine doppelte Wand ausbildende Unterbrechungselement (8) parallel und in einem vorbestimmten Abstand zur Außenwand nahezu entlang der gesamten Länge der Verteilvorrichtung (1) angeordnet ist.

3. Vorrichtung nach einem der vorangehenden Ansprüche, **dadurch gekennzeichnet, dass** das Unterbrechungselement (8) longitudinale Öffnungen (11) ausbildet, durch welche die sich entlang der Innenseite des Unterbrechungselementes (8) bewegende Luft zuerst abwärts, aber nahezu gleichzeitig horizontal nach außen strömt, wobei sie in den Raum zwischen dem Unterbrechungselement (8) und dem Außengehäuse (2) eindringt.

4. Vorrichtung nach einem der vorangehenden Ansprüche, **dadurch gekennzeichnet, dass** die Luft aus dem Außengehäuse (2) durch geeignete Löcher (12) ausströmt, welche in einem langgestreckten plattenartigen Element (13) ausgebildet sind, welches in Längsrichtung in den Körper der Verteilvorrichtung (1) eingesetzt ist.

5. Vorrichtung nach Anspruch 4 **dadurch gekennzeichnet, dass** die Löcher (12) gleich groß und gleichmäßig beabstandet, oder unterschiedlich groß und ungleichmäßig beabstandet sein können, so dass die Form des doppelwandigen Unterbrechungselementes (8) zusammen mit der Form und der Verteilung der Löcher es ermöglicht, die aus der Verteilvorrichtung (1) ausströmende Luft in der geeignetsten Weise zu steuern.

6. Vorrichtung nach Anspruch 4 **dadurch gekennzeichnet, dass** das perforierte plattenartige Element (13) in Längsrichtung an zwei einander gegenüberliegenden Seiten der Verteilvorrichtung (1) und in einem rechten Winkel zur Fahrtrichtung des Fahrzeuges angeordnet ist, so dass während der Behandlung die Luftströme und die Behandlungsflüssigkeit immer in eine Richtung senkrecht zu den Blättern der Pflanzen, Obstbäume usw. gerichtet sind.

## Revendications

1. - Dispositif de barre de distribution à air (1) pour pulvérisateurs, consistant en un carter extérieur (2) dans lequel l'air est introduit et comprenant un élément de cassure (8) qui crée une double paroi où l'air s'écoule en sortie à travers des ouvertures appropriées (11), créant des flux d'air qui sont parfaitement uniformes le long de toute la longueur du dispositif de distribution (1), dans lequel :
• ledit carter (2) du dispositif de distribution (1) est délimité et fermé, à son extrémité inférieure, par un couvercle (3) et, à son extrémité supérieure, par un second couvercle (4), tandis que sa partie supérieure comporte également un raccord coudé (5) de section transversale circulaire pour un couplage à manchon (6) agencé pour acheminer de l'air provenant d'un dispositif générant de l'air (7) dans le dispositif de distribution (1) et
• ledit élément de cassure (8) consiste en une paire de profilés (9) ayant une section sensiblement en forme de C positionnés l'un devant l'autre et reliés par des éléments de liaison (10),
lesdits deux profilés (9) fournissant une structure qui forme un trajet d'air forcé dont les lignes de courant sortant sont déterminées par le fait que ledit couplage à manchon (6) est relié audit raccord coudé (5) dont l'orifice de sortie dans le dispositif de distribution (1) mène dans ledit élément de cassure (8) de telle sorte que l'air est acheminé directement dans la chambre définie par ledit élément de cassure (8).

2. - Dispositif selon la revendication précédente, **caractérisé par le fait que** ledit élément de cassure (8), formant une double paroi, est monté parallèle à et à une certaine distance de la paroi extérieure le long de presque toute la longueur du dispositif de distribution (1).

3. - Dispositif selon l'une quelconque des revendications précédentes, **caractérisé par le fait que** ledit élément de cassure (8) forme des ouvertures longitudinales (11) à travers lesquelles l'air se déplaçant le long de l'intérieur dudit élément de cassure (8) s'écoule d'abord vers le bas mais presque simultanément également vers l'extérieur horizontalement, pénétrant dans les espaces entre ledit élément de cassure (8) et ledit carter extérieur (2).

4. - Dispositif selon l'une quelconque des revendications précédentes, **caractérisé par le fait que** l'air s'écoule hors dudit carter extérieur (2) à travers des trous appropriés (12) réalisés dans un élément allongé de type plaque (13) introduit dans le sens de la longueur dans le corps du dispositif de distribution (1).

5. - Dispositif selon la revendication 4, **caractérisé par le fait que** lesdits trous (12) peuvent être de même dimension et espacés de manière uniforme ou ils peuvent varier en dimension et en espacement, de telle sorte que la forme de l'élément de cassure (8) formant double paroi, combinée à la forme et à la distribution des trous, rend possible la commande de l'écoulement sortant d'air du dispositif de distribution (1) de la manière la plus appropriée.

6. - Dispositif selon la revendication 4, **caractérisé par le fait que** ledit élément perforé de type plaque (13) est positionné dans le sens de la longueur sur deux côtés opposés du dispositif de distribution (1) et à angle droit par rapport à la direction de déplacement du véhicule, de telle sorte que, pendant le traitement, les jets de mélange d'air et de liquide de traitement sont toujours dirigés vers les cultures, les arbres fruitiers, etc. dans une direction perpendiculaire au feuillage.
